# FASCICULE DE BREVET EUROPEEN

(11) **EP 1 667 345 B1**
(45) Date de publication et mention de la délivrance du brevet: **10.03.2010**
(21) Numéro de dépôt: 05077657.4
(22) Date de dépôt: 23.11.2005
(51) Int. Cl.: H04B 7/26, H04B 5/00

(54) **Procede de transmission d'un signal de bande FM**
Verfahren zum Senden eines FM-Signals
Method for transmitting an FM signal

(30) Priorité: 03.12.2004 FR 0412880
(43) Date de publication de la demande: 07.06.2006
(73) Titulaire: TDF, 75015 Paris (FR)
(72) Inventeur: Richard, Michel, 57420 Cheminot (FR)
(74) Mandataire: Burbaud, Eric

(56) Documents cités:
- EP-A- 0 447 302
- EP-A- 0 465 457
- WO-A-95/10889
- US-A- 5 428 829
- US-A- 5 913 169
- US-B1- 6 430 227

## Description

La présente invention concerne un procédé de transmission d'un signal de bande FM et un système de radiocommunication mettant en oeuvre ce procédé.

Plus particulièrement, l'invention se rapporte à un procédé de traitement de signaux comprenant un signal de bande FM et des signaux de communication montant et/ou descendant. Ces signaux sont destinés à être transmis sensiblement sur un même support.

Un tel procédé est connu, notamment pour permettre la réception radio dans un espace de perturbation d'ondes radio, par exemple un tunnel, ou un bâtiment dont les parois filtrent sensiblement les ondes radio. La mise en oeuvre d'un tel procédé permet de transmettre dans cet espace de perturbation à la fois un signal de bande FM analogique et un signal de communication descendant, par exemple un signal d'urgence descendant pour des services de secours. Ces signaux sont fortement amplifiés de sorte que ceux-ci puissent être captés par des utilisateurs à l'intérieur de l'espace de perturbation. Par ailleurs, une voie montante comporte un signal de communication montant, par exemple la réponse au signal d'urgence descendant, et permet de transmettre vers l'extérieur de cet espace de perturbation ce signal de communication. En pratique, on peut utiliser une fibre optique afin de transmettre ces signaux.

Cependant, lors de la mise en oeuvre d'un tel procédé, le signal de communication montant est fortement perturbé. En effet, les bandes d'intermodulation, provenant du signal de bande FM analogique, sont transmises sur la voie montante, car le signal de bande FM est transmis avec un niveau de gain élevé en comparaison du faible niveau du signal de communication montant. Par conséquent, ces bandes d'intermodulation amplifiées provoquent un bruit important dans le signal de communication montant.

De plus, le phénomène de dispersion lors de la transmission d'un signal analogique par fibre optique génère également du bruit par atténuation dans le cas de grandes longueurs de fibre optique. Ce bruit est ensuite fortement amplifié lors de la réception des différents signaux montants et descendants, ce qui entraîne une baisse significative de la qualité de la transmission.

La demande de brevet EP-A-0 465 457 décrit un système de transmission d'informations dans un tunnel, au moyen de signaux montants et descendants.

Par ailleurs, la demande internationale WO 95/10889 divulgue la transmission d'un signal FM en analogigue et en numérique afin de minimiser la largeur de bande utilisée.

Un but de la présente invention est de pallier ces différents inconvénients.

Pour cela, l'invention propose un procédé de traitement de signaux comportant un signal de bande FM et des signaux de communication montant et/ou descendant, le procédé comprenant une étape de transmission sur une voie descendante d'un même support de communication à la fois le signal de communication descendant et le signal de bande FM.

Selon une définition actuellement préférée de l'invention :
le procédé prévoit une numérisation du signal de bande FM, préalablement à l'étape de transmission.

L'invention propose également un système de radiocommunication, comprenant un support de communication comportant une voie descendante destinées à transmettre des signaux de communication entre au moins deux terminaux et ainsi qu'un signal de bande FM.

Selon une définition actuellement préférée de l'invention, le système de radiocommunication comprend un dispositif de numérisation pour numériser le signal de bande FM.

En effet, la numérisation du signal de bande FM limite les produits d'intermodulation, et donc la formation de bruit dans le signal montant. De plus, le signal numérique est moins sujet à la dispersion au sein des fibres optiques, ce qui permet d'obtenir une meilleure qualité de transmission. En outre, le signal numérique permet d'augmenter la quantité de donnée pouvant être transmise par la fibre optique. Ainsi, il est possible de transmettre par exemple en plus des signaux de bande FM, des signaux de communication GSM, UMTS ou autres.

D'autres particularités et avantages de la présente invention apparaîtront dans la description ci-après d'exemples de réalisation non limitatifs, en référence aux dessins annexés, dans lesquels :
- la figure 1 est une représentation générale d'une installation mettant en oeuvre un système de radiocommunication conforme à l'invention ;
- la figure 2 est un schéma synoptique du système de radiocommunication de la figure 1.

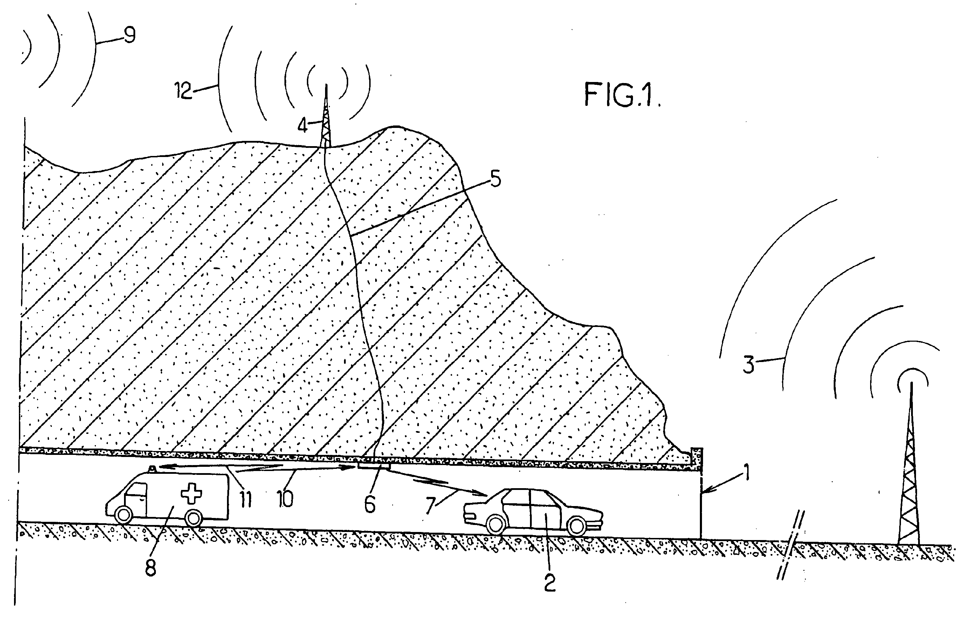

La figure 1 illustre le cas d'une installation comportant un système conforme à l'invention dans un tunnel 1 traversé par des véhicules 2. Pour que ces véhicules 2 puissent recevoir un signal radio FM 3 à l'intérieur du tunnel 1, une antenne réceptrice 4 placée à l'extérieur du tunnel fournit sur une voie descendante, par exemple par l'intermédiaire d'une fibre optique 5, le signal radio FM 3 à un dispositif de câble rayonnant 6 qui peut fortement amplifier ce signal. Ce dispositif de câble rayonnant 6 émet à l'intérieur du tunnel 1 un signal FM réémis 7, sur la base du signal transmis par l'intermédiaire de la fibre optique 5.

En outre, des véhicules de secours 8 nécessitent une liaison de communication avec un centre de secours à l'extérieur du tunnel 1. Ainsi, l'antenne réceptrice 4 fournit également au dispositif de câble rayonnant 6 un signal de communication 9. Ce dispositif de câble rayonnant 6 émet un signal de communication 10 réémis sur la base du signal transmis par l'intermédiaire de la fibre optique 5. De plus, le véhicule 8 peut répondre en émettant un signal montant 11 sur une voie montante. Ainsi, le câble rayonnant 6 reçoit ce signal montant 11, qui est transmis par l'intermédiaire de la fibre optique 5. L'antenne réceptrice 4 émet enfin un signal montant réémis 12 vers l'extérieur du tunnel 1.

Ce type d'installation du système conforme à l'invention permet de fournir à l'ensemble des véhicules à l'intérieur d'un espace de perturbation d'ondes radio, tel un tunnel, un signal de bande FM, sans détériorer la qualité de la transmission des signaux de communication d'urgence. Ces signaux de communication d'urgence peuvent être par exemple des signaux analogiques radio, ou bien des signaux numériques de type TETRA, GSM, UMTS ou autre.

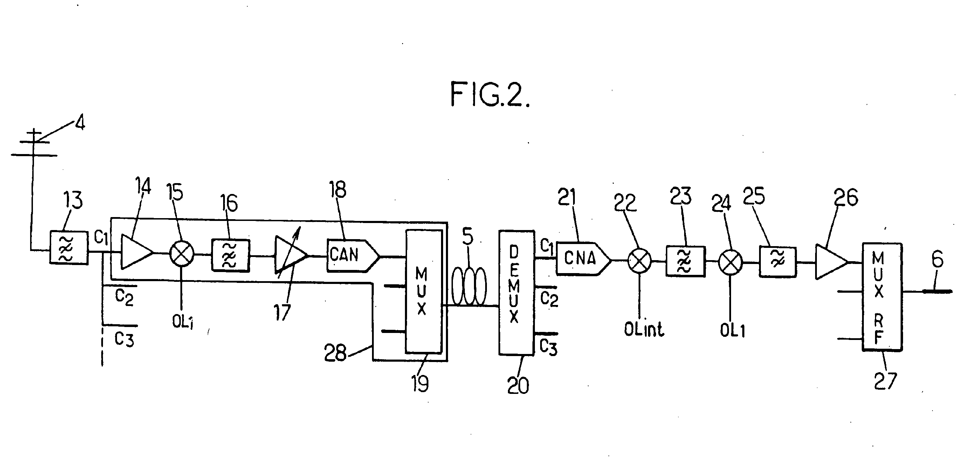

La figure 2 illustre de manière détaillée un mode de réalisation du système conforme à l'invention. Sur cette figure, l'antenne de réception 4 reçoit un signal de bande FM, composé de différents canaux C1, C2, C3 etc. Chaque canal peut être ensuite numérisé séparément par un dispositif de numérisation 28, comme décrit ultérieurement et transmis de manière numérique par l'intermédiaire de la fibre optique 5. Puis, chaque canal numérisé peut être reconverti en canal analogique et amplifié au moyen d'un amplificateur 26, puis l'ensemble des canaux est multiplexé de manière à reformer le signal de bande FM qui est ensuite réémis après une forte amplification par le câble rayonnant 6.

Les différents canaux étant numérisés les uns indépendamment des autres et de manière sensiblement identique, nous nous limiterons à la description de la numérisation d'un canal C1 par le dispositif de numérisation 28.

Ainsi, éventuellement après avoir filtré la totalité de la bande FM au moyen d'un filtre passe-bande 13 pour la plage usuelle de bande FM (87-108 MHz), le signal est fourni au dispositif de numérisation 28 du canal C1. Au sein de ce dispositif de numérisation 28, le signal de bande FM peut être amplifié par l'amplificateur 14, par exemple un amplificateur faible bruit ayant un gain fixe de 30 dB. Un mélangeur 15 peut ensuite permettre de transposer chaque fréquence de canal vers une fréquence intermédiaire, par exemple 10,7 MHz. Pour cela, le signal d'un premier oscillateur local OL1 adapté à ce canal C1, par exemple obtenu par synthèse de fréquence, est multiplié avec le signal de bande FM. Afin de ne récupérer que le signal du canal C1, le signal obtenu après multiplication avec le signal de l'oscillateur local OL1, est filtré en général au moyen d'un filtre passe-bande 16 relativement étroit, par exemple 500 KHz de largeur de bande et centré sur la fréquence intermédiaire.

Un circuit de commande automatique du gain 17 adapte le gain du signal de telle sorte que l'ensemble des canaux de bande FM ait le même niveau. Ainsi, on peut ensuite numériser facilement les signaux au moyen d'un convertisseur analogique-numérique (ou CAN) 18. On peut employer par exemple un CAN 18 de 8 bits, et dont la fréquence d'échantillonnage de l'ordre de 1 MHz.

Les différents canaux C1, C2, C3 etc sont ensuite multiplexés par un multiplexeur (MUX) 19 et transmis par l'intermédiaire de la fibre optique 5 à un démultiplexeur (DEMUX) 20. Le signal de communication descendant est également multiplexé avec les canaux de bande radio numérisés. Si ce signal de communication descendant est analogique, celui-ci peut être numérisé selon un procédé identique à celui employé pour les canaux de bande FM en le considérant par exemple comme l'un des canaux de bande FM.

Ce multiplexage permet un haut débit de données sur un seul support de transmission, dans ce cas, la fibre optique 5, mais permet aussi d'empêcher une dégradation de l'ensemble des signaux. Ce multiplexage peut être temporel, ou bien fréquentiel, ou autre.

Une fois transmis par la fibre optique 5, les différents canaux de bande FM C1, C2, C3 etc. et le signal de communication descendant sont donc démultiplexés par le démultiplexeur (DEMUX) 20. Chaque canal de bande FM est alors reconverti en signal analogique. Pour cela, le démultiplexeur 20 ne fournit par exemple que les données du canal C1 à un convertisseur numérique-analogique (CNA) 21 dédié au canal C1. Ce CNA 21 transforme les données codées par exemple sur 8 bits, pour les convertir en valeurs quantifiées correspondantes aux données. Le signal obtenu est ensuite multiplié à un signal donné par un Oscillateur Local intermédiaire (OLint) au moyen d'un mélangeur 22. La fréquence de l'oscillateur local intermédiaire est par exemple de 10,4108MHz, de telle sorte que le signal en sortie du CNA 21 se voit alors transposée autour d'une fréquence intermédiaire d'environ 10,7MHz. Un filtre passe-bande étroit 23, sensiblement identique au filtre passe-bande 16, permet de ne retrouver que le signal du canal C1, centré sur la fréquence intermédiaire.

Enfin, le signal de canal C1 centré sur la fréquence intermédiaire est de nouveau multiplié au moyen d'un mélangeur 24 avec un signal provenant d'un oscillateur local identique à celui de l'étape de codage, puis filtré par un filtre passe-haut 25 pour éliminer les composantes basses du signal résultant de la multiplication. Avant que les canaux C1, C2, C3 etc, et le signal de communication descendant ne soient multiplexés en analogique au moyen d'un multiplexeur radiofréquence (MUX RF) 27, chacun de ces canaux est amplifié par un amplificateur 26. Puis, le signal obtenu est émis par le câble rayonnant 6.

Selon un mode de réalisation, le signal de communication montant est également numérisé, par un procédé sensiblement identique à celui expliqué ci-dessus. Ceci permet de diminuer encore les dégradations du signal montant.

## Revendications

1. Procédé de traitement de signaux comprenant un signal de bande FM analogique (3, 7) et des signaux de communication montant (10, 12) et/ou descendant (9, 11) entre au moins deux terminaux, comprenant une étape de transmission sur une voie descendante d'un même support de communication descendant (5) à la fois le signal de communication descendant (9, 11) et le signal de bande FM (3, 7), **caractérisé en ce qu'**il comporte une numérisation du signal de bande FM (3, 7), préalablement à l'étape de transmission, dans lequel le support de communication (5) comporte une première extrémité en amont par rapport à la direction de propagation de la voie descendante, et une seconde extrémité en aval, et suivant lequel
- on reçoit au niveau de la première extrémité le signal de bande FM (3), en analogique et le signal de communication (9)
- on transmet ensemble le signal de bande FM en numérique et le signal de communication à la seconde extrémité par l'intermédiaire du support (5), et
- au niveau de la seconde extrémité, on réémet au moins le signal de bande FM (7) en analogique.

2. Procédé selon la revendication 1, **caractérisé en ce qu'**il comporte une étape de réémission du signal de bande FM analogique (3, 7) par l'intermédiaire d'un câble rayonnant (6).

3. Procédé selon la revendication 1 ou la revendication 2, **caractérisé en ce que** :
- le signal de bande FM (3, 7) comprend une multiplicité de canaux de bande FM (C1, C2, C3),
- la numérisation du signal de bande FM (3, 7) comprend :
• le réglage du gain pour chaque canal de bande FM (C1, C2, C3),
• la numérisation de chaque canal de bande FM (C1, C2, C3), et
■ le multiplexage des canaux de bande FM (C1, C2, C3) numérisés avec le signal de communication.

4. Procédé selon l'une quelconque des revendications précédentes, **caractérisé en ce que** ledit support (5) comprend en outre une voie montante sur laquelle sont transmis des signaux de communication montants (10, 12) entre au moins deux terminaux.

5. Système de radiocommunication, comprenant un support de communication (5) comportant une voie descendante destinées à transmettre des signaux de communication (9, 11) entre au moins deux terminaux et ainsi qu'un signal de bande FM analogique (3, 7), **caractérisé en ce que** ledit système de radiocommunication comprend un dispositif de numérisation (28) pour numériser le signal de bande FM, et **en ce que** :
- le support (5) comporte une première extrémité on amont par rapport à la direction de propagation de la voie descendante, et une seconde extrémité en aval, et
- le système comporte :
• un dispositif de réception (4) au niveau de la première extrémité pour recevoir le signal radio FM analogique (3) et le signal de communication (9), et
• un dispositif de réémission (6) au niveau de la seconde extrémité pour réémettre de manière analogique le signal radio FM transmis de manière numérique sur le même support (5).

6. Système de radiocommunication selon la revendication 5, **caractérisé en ce qu'**il comporte, en aval du dispositif de numérisation (28) sur la voie descendante, un dispositif de restitution pour réémettre de manière analogique les signaux de communication (11) et le signal de bande FM (7).

7. Système de radiocommunication selon l'une des revendications 5 et 6,
**caractérisé en ce que :**
- le signal de bande FM (3, 7) comprend une multiplicité de canaux de bande FM (C1, C2, C3), et
- le dispositif de numérisation (28) du signal de bande FM comprend :
• un dispositif de réglage du gain (17) pour chaque canal de bande FM, et
• un multiplexeur (19) pour multiplexer les canaux de bande FM numérises et le signal de communication.

8. Système de radiocommunication selon la revendication 5, **caractérisé en ce que** le support de communication (5) comporte au moins en partie une fibre optique entre les première et seconde extrémités.

9. Système de radiocommunication selon l'une des revendications 5 et 8, **caractérisé en ce que** la seconde extrémité se situe à l'intérieur d'un espace de pertubation (1) d'ondes radio et la première extrémité se situe à l'extérieur dudit espace de pertubation (1).

10. Système de radiocommunication selon l'une quelconque des revendications 5 à 9, dans lequel la seconde extrémité du support est raccordée à au moins un câble rayonnant (6).

11. Système de radiocommunication selon l'une quelconque des revendications 5 à 10, **caractérisé en ce que** ledit support (5) comprend en outre une voie montante sur laquelle sont transmis un signal de communication montant (10, 12) entre au moins deux terminaux.

## Claims

1. Method of processing signals comprising an analogue FM band signal (3, 7) and up-link (10, 12) and/or down-link (9, 11) communication signals between at least two terminals, comprising a step of transmitting both the down-link communication signal (9, 11) and the FM band signal (3, 7) on a down-link channel of a same down-link communication support (5), **characterised in that** it involves digitizing the FM band signal (3, 7), prior to the transmission step, wherein the communication support (5) comprises a first end which is upstream with reference to the direction in which the down-link channel is propagated and a second end which is downstream, and wherein
- the analogue FM band signal (3) and the communication signal (9) are received at the first end,
- the digitized FM band signal and the communication signal are transmitted together via the support (5) to the second end, and
- at least the analogue FM band signal (7) is re-emitted at the second end.

2. Method as claimed in claim 1, **characterised in that** it comprises a step of re-emitting the analogue FM band signal (3, 7) via a radiating cable (6).

3. Method as claimed in claim 1 or claim 2, **characterised in that**:
- the FM band signal (3, 7) comprises a plurality of FM band channels (C1, C2, C3),
- the digitizing of the FM band signal (3, 7) involves:
• regulating the gain for each FM band channel (C1, C2, C3),
• digitizing each FM band channel (C1, C2, C3) and
• multiplexing the digitized FM band channels (C1, C2, C3) with the communication signal.

4. Method as claimed in any one of the preceding claims, **characterised in that** said support (5) further comprises an up-link channel on which up-link communication signals (10, 12) are transmitted between at least two terminals.

5. Radio communication system comprising a communication support (5) comprising a down-link channel for transmitting communication signals (9, 11) between at least two terminals as well as an analogue FM band signal (3, 7), **characterised in that** said radio communication system has a digitizing device (28) for digitizing the FM band signal, and **in that**:
- the support (5) comprises a first end which is upstream with reference to the direction in which the down-link channel is propagated and a second end which is downstream, and
- the system comprises:
• a receiving device (4) at the first end for receiving the analogue FM radio signal (3) and the communication signal (9) and
• a re-emitting device (6) at the second end for re-emitting in analogue the FM radio signal digitally transmitted on the same support (5).

6. Radio communication system as claimed in claim 5, **characterised in that** it comprises, downstream of the digitizing device (28) on the down-link channel, a reconstituting device for re-emitting in analogue the communication signals (11) and the FM band signal (7).

7. Radio communication system as claimed in one of claims 5 and 6,
**characterised in that**:
- the FM band signal (3, 7) comprises a plurality of FM band channels (C1, C2, C3), and
- the device (28) for digitizing the FM band signal comprises:
• a gain regulating device (17) for each FM band channel and
• a multiplexer (19) for multiplexing the digitized FM band channels and the communication signal.

8. Radio communication system as claimed in claim 5, **characterised in that** the communication support (5) at least partially comprises an optical fibre between the first and second ends.

9. Radio communication system as claimed in one of claims 5 and 8, **characterised in that** the second end is disposed within an area (1) in which reception of radio waves is poor and the first end is disposed outside said area (1) of poor reception.

10. Radio communication system as claimed in any one of claims 5 to 9, in which the second end of the support is connected to at least one radiating cable (6).

11. Radio communication system as claimed in any one of claims 5 to 10, **characterised in that** said support (5) further comprises at least one up-link channel on which an up-link communication signal (10, 12) is transmitted between at least two terminals.

## Patentansprüche

1. Verfahren zur Behandlung von Signalen, umfassend ein analoges FM-Signal (3, 7) und Aufwärts-Kommunikationssignale (10, 12) und/ oder Abwärts-Kommunikationssignale (9, 11) zwischen wenigstens zwei Terminals, umfassend die Übertragung auf einer Abwärtsstrecke eines selben Abwärts-Kommunikationsträgers (5) von zugleich dem Abwärts-Kommunikationssignal (9, 11) und dem FM-Signal (3, 7), **dadurch gekennzeichnet, dass** es eine Digitalisierung des FM-Signals (3, 7) vor der Übertragung umfasst, wobei der Kommunikationsträger (5) in Bezug auf die Ausbreitungsrichtung der Abwärtsstrecke aufwärts einen ersten Endabschnitt und abwärts einen zweiten Endabschnitt umfasst, und wobei
- an dem ersten Endabschnitt das analoge FM-Signal (3) analog und das Kommunikationssignal (9) empfängt werden,
- das digitalisierte FM-Signal und das Kommunikationssignal an dem zweiten Endabschnitt zusammen durch den Träger (5) vermittelt überträgt werden, und
- an dem zweiten Endabschnitt wenigstens das FM-Signal (7) analog wiederaussendet wird.

2. Verfahren nach Anspruch 1, **dadurch gekennzeichnet, dass** es eine Wiederaussendung des analogen FM-Signals (3, 7) vermittelt durch ein abstrahlendes Kabel (6) umfasst.

3. Verfahren nach Anspruch 1 oder Anspruch 2, **dadurch gekennzeichnet, dass:**
- das FM-Signal (3, 7) eine Vielzahl von FM-Kanälen (C1, C2, C3) umfasst,
- die Digitalisierung des FM-Signals (3, 7) umfasst:
• die Regelung der Verstärkung für jeden FM-Kanal (C1, C2, C3),
• die Digitalisierung von jedem FM-Kanal (C1, C2, C3), und
• das Multiplexen der digitalisierten FM-Kanäle (C1, C2, C3) mit dem Kommunikationssignal.

4. Verfahren nach einem der vorhergehenden Ansprüche, **dadurch gekennzeichnet, dass** der Träger (5) weiterhin eine Aufwärtsstrecke umfasst, auf der Aufwärts-Kommunikationssignale (10, 12) zwischen wenigstens zwei Terminals übertragen werden.

5. Radiokommunikationssystem, umfassend einen Kommunikationsträger (5), der eine Abwärtsstrecke umfasst, die dazu bestimmt ist, zwischen wenigstens zwei Terminals Kommunikationssignale (9, 11) sowie ein analoges FM-Signal (3, 7) zu übertragen, **dadurch gekennzeichnet, dass** das Radiokommunikationssystem eine Digitalisierungsvorrichtung (28) zur Digitalisierung des FM-Signals umfasst, und **dadurch**, dass:
- der Träger (5) in Bezug auf die Ausbreitungsrichtung der Abwärtsstrecke aufwärts einen ersten Endabschnitt und abwärts einen zweiten Endabschnitt umfasst, und
- das System umfasst:
• eine Empfangsvorrichtung (4) an dem ersten Endabschnitt, um das analoge Radio-FM-Signal (3) und das Kommunikationssignal (9) zu empfangen, und
• eine Wiederaussendungsvorrichtung (6) an dem zweiten Endabschnitt, um in analoger Art das auf digitale Art auf demselben Träger übertragene Radio-FM-Signal wiederauszusenden.

6. Radiokommunikationssystem nach Anspruch 5, **dadurch gekennzeichnet, dass** es abwärts der Digitalisierungsvorrichtung (28) auf der Abwärtsstrecke eine Wiedergabevorrichtung umfasst, um die Kommunikationssignale (11) und das FM-Signal (7) in analoger Art wiederauszusenden.

7. Radiokommunikationssystem nach einem der Ansprüche 5 und 6, **dadurch gekennzeichnet, dass:**
- das FM-Signal (3, 7) eine Vielzahl von FM-Kanälen (C1, C2, C3) umfasst, und
- die Digitalisierungsvorrichtung (28) des FM-Signals umfasst:
• eine Vorrichtung zur Regelung der Verstärkung (17) für jeden FM-Kanal, und
• einen Multiplexer (19) zum Multiplexen der digitalisierten FM-Kanäle und des Kommunikationssignals.

8. Radiokommunikationssystem nach Anspruch 5, **dadurch gekennzeichnet, dass** der Kommunikationsträger (5) wenigstens teilweise eine optische Faser zwischen dem ersten und dem zweiten Endabschnitt umfasst.

9. Radiokommunikationssystem nach einem der Ansprüche 5 und 8, **dadurch gekennzeichnet, dass** sich der zweite Endabschnitt im Inneren eines Störungsraumes (1) für Radiowellen befindet und sich der erste Endabschnitt außerhalb des Störungsraumes (1) befindet.

10. Radiokommunikationssystem nach einem der Ansprüche 5 bis 9, wobei der zweite Endabschnitt des Trägers an wenigstens ein abstrahlendes Kabel (6) angeschlossen ist.

11. Radiokommunikationssystem nach einem der Ansprüche 5 bis 10, **dadurch gekennzeichnet, dass** der Träger (5) weiterhin eine Aufwärtsstrecke umfasst, auf der ein Aufwärts-Kommunikationssignal (10, 12) zwischen wenigstens zwei Terminals übertragen wird.
